# EUROPÄISCHE PATENTANMELDUNG

(11) **EP 3 561 733 A1**
(43) Veröffentlichungstag der Anmeldung: **30.10.2019**
(21) Anmeldenummer: 18169164.3
(22) Anmeldetag: 25.04.2018
(51) Int. Cl.: G06N 3/04, H04L 29/06, H04L 29/08

(54) **KOMMUNIKATIONSGERÄT**

(71) Anmelder: Deutsche Telekom AG, 53113 Bonn (DE)
(72) Erfinder: SCHNIEDERS, Dominik, 52078 Aachen (DE)
(74) Vertreter: Raible Deissler Lehmann Patentanwälte PartG mbB

(57) **Zusammenfassung**

Kommunikationsgerät 200 zum Auswerten von Sensordaten 601 mit einem ersten künstlichen neuronalen Netz 606 und einem zweiten künstlichen neuronalen Netz 607 mit einer Kommunikationsschnittstelle 203, die dazu eingerichtet ist, mit einem Server 300 über das Kommunikationsnetzwerk 107 zu kommunizieren und einem Sensor 201, der dazu eingerichtet ist, physikalische Parameter zu erfassen und als Sensordaten 601 bereitzustellen. Das Kommunikationsgerät 200 hat einen Prozessor 204, der dazu eingerichtet ist, das erste künstliche neuronale Netz 606 lokal in dem Kommunikationsgerät 200 auszuführen, um die Datenmenge der bereitgestellten Sensordaten 601 mit dem ersten künstlichen neuronalen Netz 606 zu reduzieren und so reduzierte Sensordaten als Zwischenergebnis zu erhalten. Die Kommunikationsschnittstelle 203 ist ausgebildet, die reduzierten Sensordaten als Zwischenergebnis an den Server 300 über das Kommunikationsnetzwerk 107 zu übertragen um die reduzierten Sensordaten in dem zweiten künstlichen neuronalen Netz 607 zu verarbeiten und so verarbeitete Sensordaten zu erhalten und von dem Server 300 die verarbeiteten Sensordaten zu empfangen und dem Prozessor 204 für eine weitere Auswertung bereitzustellen. Die Erfindung betrifft des Weiteren einen Server 300, ein Kommunikationssystem 400 und ein Verfahren. [Fig. 2]

## Beschreibung

Die Erfindung betrifft ein Kommunikationsgerät zum Auswerten von Sensordaten mit einem neuronalen Netz. Die Erfindung betrifft des Weiteren einen Server, ein Kommunikationssystem und ein Verfahren.

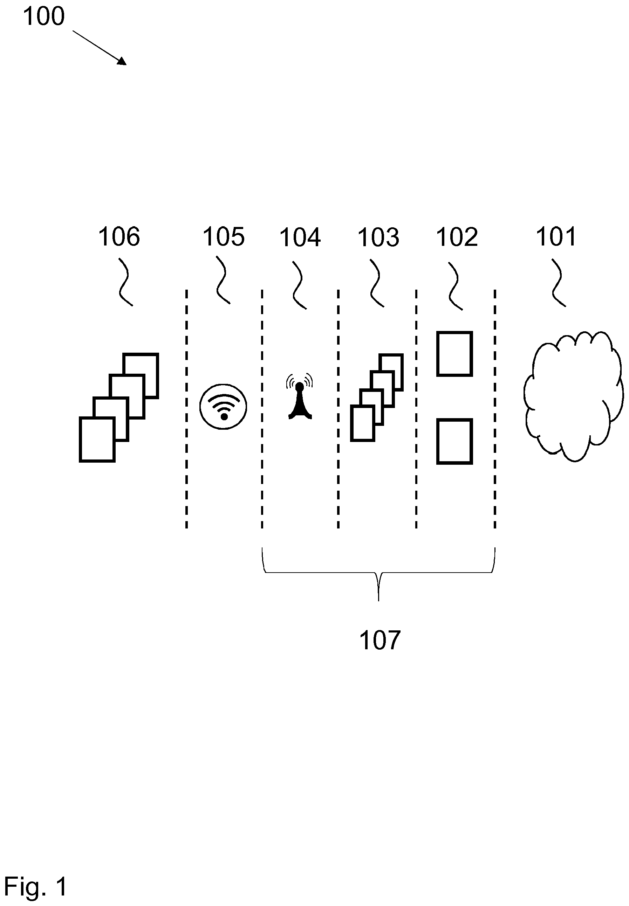

Fig. 1 zeigt eine Netzwerkanordnung 100. Die Netzwerkanordnung 100 weist eine Internet-Ebene 101 auf, eine Backbone-Ebene 102, eine Edge-Data-Center-Ebene 103, eine Zugangspunkt-Ebene 104, insbesondere eine Access-Node-Ebene umfassend eine Basistation, einen Zugangsebene 105 umfassend Zugangspunkte und eine Geräte-Ebene 106. Während die Internet-Ebene 101 verschiedene Netze miteinander verbindet, wird durch ein Kommunikationsnetzwerk 107 umfassend die Backbone-Ebene 102, die Edge-Data-Center-Ebene 103 und die Zugangspunkt-Ebene 104 die Geräte-Ebene 106 mit der Internet-Ebene 101 verbunden. Über die Zugangsebene 105 werden die Geräte der Geräte-Ebene 106 mit dem Kommunikationsnetzwerk 107 verbunden. Je weiter eine Ebene von der Geräte-Ebene 106 entfernt ist, desto höher ist die Umlaufzeit (engl.: roundtrip time, kurz: RTT) von Daten zwischen der Geräte-Ebene 106 und dieser Ebene. Die Umlaufzeit beschreibt die Laufzeit eines Datenpakets von beispielsweise einem Endgerät aus der Geräte-Ebene 106 zu einem Empfänger und zurück. Je näher der Empfänger des Datenpaketes, zum Beispiel ein Server, an der Geräte-Ebene 106 liegt, desto geringer sind Laufzeitunterschiede und Störungen wie Jitter.

Am Rande des Kommunikationsnetzwerks 107, d. h. an einer Edge des Kommunikationsnetzwerks 107, beispielsweise in der Edge-Data-Center-Ebene 103, also nahe der Geräte-Ebene 106, sind die Laufzeiten zwischen den Geräten aus der Geräte-Ebene 106 und Empfängern geringer als zwischen Geräten aus der Geräte-Ebene 106 und dem Backbone-Netzwerk 102 oder dem Internet 101. Durch die geringeren Umlaufzeiten können echtzeitkritische Anwendungen über das Kommunikationsnetzwerk 107 realisiert werden. Hierzu kann ein Gerät aus der Geräte-Ebene 106 Funktionen in das Kommunikationsnetzwerk 107 auslagern, ohne dass störende Umlaufzeiten entstehen.

Der Begriff echtzeitkritisch meint in diesem Zusammenhang auch nahe-echtzeitkritische Funktionalitäten mit geringen zeitlichen Verzögerungen. Dies erlaubt komplexe Berechnungen durchzuführen, auch wenn das Endgerät diese aufgrund einer geringen Rechenleistung nicht lokal ausführen könnte.

Eine Möglichkeit, komplexe Berechnungen durchzuführen, bilden künstliche neuronale Netze, insbesondere tiefe neuronale Netze mit mehreren Verarbeitungsschichten. Beispielsweise finden künstliche neuronale Netze Anwendung in der Objekterkennung bei Bildern, Applikationen oder künstlicher Intelligenz. Ein Einsatz eines derartigen neuronalen Netzes kann beispielsweise zur Erfassung eines Umfelds eines Fahrzeugs in Verbindung mit einem Fahrerassistenzsystem erfolgen.

Die komplexen Problemstellungen, die mit solchen tiefen neuronalen Netzen gelöst werden können, gehen häufig einher mit einer hohen Anzahl an Input-Daten, d. h. einer hohen Datenmenge, die an den Server übertragen werden muss, auf dem das tiefe neuronale Netz eingerichtet ist.

Häufig ist der Uplink, d. h. das Senden von Daten von der Geräte-Ebene 106 in das Kommunikationsnetzwerk 107 weniger performant als die umgekehrte Richtung, d. h. ein Downlink von dem Kommunikationsnetzwerk 107 in die Geräte-Ebene 106 auf ein Endgerät. Dies betrifft insbesondere mobile Netzwerke, aber auch Festnetzanschlüsse.

Eine Zunahme von Anwendungen, die eine Verarbeitung mit tiefen neuronalen Netzen im Backend benötigen und dabei große Datenmengen im Uplink an einen Server übertragen müssen, stellen eine technische Herausforderung dar. Die oben beschriebenen Limitierungen im Uplink können Probleme erzeugen.

Es ist eine Aufgabe der Erfindung, ein vorteilhaftes Konzept für die Übertragung von Daten bei der Verwendung eines neuronalen Netzes in einem Kommunikationsnetzwerk aufzuzeigen.

Der Erfindung liegt die Idee zugrunde, dass die Uplink-Datenmenge durch eine Vorverarbeitung reduziert werden kann. Hierbei kann ein erstes künstliches neuronales Netz bereits in einem Kommunikationsgerät ausgeführt werden.

Gemäß einem ersten Aspekt wird die Aufgabe durch ein Kommunikationsgerät zum Auswerten von Sensordaten mit einem ersten künstlichen neuronalen Netz und einem zweiten künstlichen neuronalen Netz gelöst. Das erste künstliche neuronale Netz ist dazu eingerichtet, eine zu verarbeitende Datenmenge von Sensordaten durch eine erste Verarbeitung zu reduzieren und reduzierte Sensordaten als Zwischenergebnis auszugeben. Das zweite künstliche neuronale Netz ist dazu eingerichtet, eine zweite Verarbeitung der reduzierten Sensordaten durchzuführen und verarbeitete Sensordaten auszugeben, wobei das Kommunikationsgerät über ein Kommunikationsnetzwerk mit einem Server verbunden ist, der dazu eingerichtet ist, das zweite künstliche neuronale Netz auszuführen. Das Kommunikationsgerät hat eine Kommunikationsschnittstelle, die dazu eingerichtet ist, mit dem Server über das Kommunikationsnetzwerk zu kommunizieren und einen Sensor, der dazu eingerichtet ist, physikalische Parameter zu erfassen und als Sensordaten bereitzustellen. Das Kommunikationsgerät weist des Weiteren einen Prozessor auf, der dazu eingerichtet ist, das erste künstliche neuronale Netz lokal in dem Kommunikationsgerät auszuführen, um die Datenmenge der bereitgestellten Sensordaten mit dem ersten künstlichen neuronalen Netz zu reduzieren und so reduzierte Sensordaten als Zwischenergebnis zu erhalten. Die Kommunikationsschnittstelle ist ausgebildet, die reduzierten Sensordaten als Zwischenergebnis an den Server über das Kommunikationsnetzwerk zu übertragen um die reduzierten Sensordaten in dem zweiten künstlichen neuronalen Netz zu verarbeiten und so verarbeitete Sensordaten zu erhalten. Die Kommunikationsschnittstelle ist ausgebildet von dem Server die verarbeiteten Sensordaten zu empfangen und dem Prozessor für eine weitere Auswertung bereitzustellen.

Bei künstlichen neuronalen Netzen, insbesondere tiefen neuronalen Netzen, werden unterschiedliche Operationen in verschiedenen Schichten ausgeführt. Beispielsweise werden bei einer Bilderkennung vorwärts gerichtete neuronale Netze verwendet, sogenannte Deep Convolutional Neural Networks, kurz: Deep CNNs. Hierbei können Vorverarbeitungen durchgeführt werden, beispielsweise Faltungen, und anschließend ein voll verbundenes neuronales Netz mit einer hohen Anzahl von Schichten für die Klassifizierung der Daten eingesetzt werden.

Das erste künstliche neuronale Netz und das zweite künstliche neuronale Netz können zusammen Schichten eines gemeinsamen künstlichen neuronalen Netzes darstellen. Das zweite künstliche neuronale Netz kann ein vollvermaschtes künstliches neuronales Netz sein und mehrere Schichten umfassen.

Durch das Ausführen des ersten künstlichen neuronalen Netzes in dem Kommunikationsgerät, beispielsweise einem Endgerät, wird Rechenleistung zur Verringerung der Datenmenge im Kommunikationsgerät aufgewendet. Die benötigte Rechenleistung zur Reduzierung der Datenmenge durch Ausführen des ersten künstlichen neuronalen Netzes ist gering im Vergleich zur Rechenleistung die zur Durchführung des zweiten künstlichen neuronalen Netzes oder des gemeinsamen künstlichen neuronalen Netzes aufgewendet werden muss. Diese Rechenleistung lässt sich durch das Kommunikationsgerät bewerkstelligen, auch wenn dieses eine im Vergleich zu dem Server geringere Rechenleistung aufweist.

Durch die erste Verarbeitung reduziert sich die Datenmenge, die an das zweite künstliche neuronale Netz an den Server gesendet werden soll. Auf diese Weise lassen sich größere Datenmengen auch unter Echtzeitbedingungen noch verarbeiten, da nach der Vorverarbeitung in dem Kommunikationsgerät eine geringere Datenmenge übertragen werden muss. Wird das erste künstliche neuronale Netz lokal auf dem Kommunikationsgerät ausgeführt, dann wird die Datenmenge bereits vor der Übertragung in das Kommunikationsnetzwerk reduziert. Die Reduzierung kann hierbei eine inhaltliche Bearbeitung der bereitgestellten Sensordaten umfassen und unterscheidet sich so von einer reinen Komprimierung der Sensordaten.

Die Sensordaten können bereits eine graphische Aufbereitung erfahren haben. Die physikalischen Parameter umfassen beispielsweise Lichtreflexionen, Schallwellen oder Temperaturen. Die Sensordaten können entsprechend Bilddaten, Audiodaten oder weitere Daten, wie Temperaturdaten, umfassen.

Gemäß einer Ausgestaltung ist der Prozessor dazu eingerichtet, die reduzierten Sensordaten vor dem Übertragen zu komprimieren.

Eine Komprimierung der durch die Ausführung des ersten künstlichen neuronalen Netzes reduzierten Sensordaten reduziert die zu übertragende Datenmenge weiter. Hierdurch kann die Übertragung der Sensordaten an den Server beschleunigt werden. Die Komprimierung kann hierbei über einen an sich bekannten Komprimierungsalgorithmus erfolgen.

In einer Ausgestaltung ist das Kommunikationsgerät ein Smartphone oder einen Tablet-Computer oder ein Notebook oder einen Desktopcomputer oder ist in einem Fahrzeug angeordnet.

Eine Anwendung rechenintensiver Funktionen, die mit einem Smartphone verwendet werden können, kann den Einsatzbereich von Smartphones noch weiter erhöhen. Durch Auslagern von komplexen Berechnungen in eine Edge eines Kommunikationsnetzwerks kann auch mit solchen leistungsschwachen Computersystemen eine echtzeitkritische Anwendung hoher Komplexität verwendet werden. Das Gleiche betrifft einen Tablet-Computer, ein Notebook oder ein Desktop-Computer, zu deren Leistungssteigerung zusätzlich ein Server hinzugezogen werden kann. Das Kommunikationsgerät kann in einem Fahrzeug angeordnet sein, beispielsweise ein Bordcomputer des Fahrzeugs sein, und kann zu einer augmentierten Realität und zur Erkennung von Personen oder Gegenständen beim Fahren, insbesondere beim autonomen Fahren, beitragen. Hierfür können Bilddaten von Aufnahmen während der Fahrt in Echtzeit ausgewertet werden.

In einer Ausgestaltung ist der Prozessor dazu eingerichtet, als weitere Auswertung eine graphische Darstellung der verarbeiteten Sensordaten bereitzustellen.

Die verarbeiteten Sensordaten können auf einer Ausgabeeinrichtung des Kommunikationsgerätes ausgegeben werden. Handelt es sich bei den Sensordaten beispielsweise um Bilddaten so kann die Auswertung mit dem ersten und dem zweiten künstlichen neuronalen Netz eine Personenerkennung umfassen und der Prozessor kann dazu eingerichtet sein, die erkannten Personen auf einem Bildschirm hervorzugeben bzw. auszugeben, insbesondere im Zusammenhang mit einer augmentierten oder virtuellen Realität.

Gemäß einer Ausgestaltung ist der Prozessor dazu eingerichtet, bei der Ausführung des ersten künstlichen neuronale Netzes eine Faltung der Sensordaten durchzuführen um gefaltete Sensordaten zu erhalten.

Die Faltung kann hierbei dazu führen, dass Basisstrukturen in den Sensordaten erkannt werden können. Beispielsweise können Strukturen oder kanten in Bilddateien erkannt werden. Hierbei können 5x5-Matrixfilter zum Einsatz kommen. Das erste künstliche neuronale Netz kann hierbei ein CNN sein.

Gemäß einer Ausgestaltung ist der Prozessor dazu eingerichtet, bei der Ausführung des ersten künstlichen neuronale Netzes ein Pooling der gefalteten Sensordaten durchzuführen.

Das Pooling kann ein Subsampling umfassen. Hierdurch können beispielsweise die Basisstrukturen und die Texturen einer Bilddatei hervorgehoben werden und gleichzeitig die zu übertragende Datenmenge durch das Pooling reduziert werden.

Gemäß einer Ausgestaltung ist der Prozessor dazu eingerichtet ist, bei der Ausführung des ersten künstlichen neuronale Netzes die Faltung der Sensordaten und das Pooling der gefalteten Sensordaten rekursiv durchzuführen.

Die Faltung und das Pooling kann in der ersten Schicht mehrfach wiederholt werden. Durch Mehrfachanwenden von Faltung und Pooling kann die Datenmenge der Sensordaten weiter reduziert werden. Hierbei kann das Ergebnis der Faltung der bereitgestellten Sensordaten durch Pooling bearbeitet werden um Daten mit reduzierter Datenmenge zu erhalten. Diese Daten mit reduzierter Datenmenge werden erneut gefaltet und mit Pooling reduziert um Daten mit weiter reduzierter Datenmenge zu erhalten. Dies kann weiter fortgesetzt werden, sodass jeweils das Poolingergebnis eines vorhergehenden Durchgangs gefaltet und anschließend weiter durch Pooling reduziert wird.

Gemäß einem zweiten Aspekt wird die Aufgabe durch einen Server zum Verarbeiten von durch ein erstes künstliches neuronales Netz reduzierten Sensordaten mit einem zweiten künstlichen neuronalen Netz gelöst. Die reduzierten Sensordaten umfassen Sensordaten eines Sensors eines Kommunikationsgeräts mit reduzierter Datenmenge, wobei der Server in einem Kommunikationsnetzwerk angeordnet ist. Der Server weist eine Kommunikationsschnittstelle auf, die dazu eingerichtet ist, die reduzierten Sensordaten von dem Kommunikationsgerät zu empfangen, das eingerichtet ist, das erste künstliche neuronale Netz auszuführen um die Datenmenge der Sensordaten des Sensors zu reduzieren. Der Server weist einen Prozessor auf, der dazu eingerichtet ist, das zweite künstliche neuronalen Netz auszuführen um aus den empfangenen reduzierten Sensordaten verarbeitete Sensordaten zu erhalten. Die Kommunikationsschnittstelle ausgebildet ist, die verarbeiteten Sensordaten an das Kommunikationsgerät zu übertragen.

Der Server kann eine Netzwerkentität sein. Der Server kann Teil einer Netzwerkentität sein, die mehrere Server umfasst, auf denen das zweite künstliche neuronale Netz eingerichtet ist. Das Kommunikationsnetzwerk kann ein 4G- oder ein 5G-Netzwerk sein. Das zweite künstliche neuronale Netz kann ein künstliches neuronales Netz sein, das auf die Funktionalität des ersten neuronalen Netzes verzichtet, insbesondere keine Schritte des Faltens der Eingangsdaten oder des Poolings der gefalteten Daten ausführt.

In einer Ausgestaltung ist der Server an einem Rand des Kommunikationsnetzwerks angeordnet.

Der Server kann hierbei insbesondere in einer Edge des Kommunikationsnetzwerks angeordnet sein. Durch diese Anordnung lässt sich Edge Computing ausführen. Somit rückt der Server näher an die Geräte-Ebene und an die Endgeräte, was Laufzeiten reduziert.

In einer Ausgestaltung ist das zweite künstliche neuronalen Netz dazu eingerichtet ist, eine Klassifizierung der reduzierten Sensordaten durchzuführen.

Eine Klassifizierung dann eine Bestimmung von Merkmalen der Sensordaten umfassen, die zu einem Auswertungsergebnis gehört. Beispielsweise können in Bilddaten erkannte Kanten zu Gruppen klassifiziert werden, die einer potentiellen Gefahr zugehörig sind, insbesondere Personen oder Bewegungen von Personen.

Gemäß einem dritten Aspekt wird die Aufgabe durch ein Kommunikationssystem gelöst. Das Kommunikationssystem umfasst ein Kommunikationsgerät der oben beschriebenen Art, einen Server der oben beschriebenen Art und eine Basisstation eines Kommunikationsnetzwerks. Die Kommunikationsschnittstelle des Kommunikationsgeräts ist dazu eingerichtet, die reduzierten Sensordaten über die Basisstation an den Server zu übertragen.

Die Basisstation kann in einem Funknetzwerk, einem RAN, angeordnet sein und beispielsweise ein eNodeB sein.

Gemäß einem vierten Aspekt wird die Aufgabe durch ein Verfahren zum Auswerten von Sensordaten mit einem ersten künstlichen neuronalen Netz und einem zweiten künstlichen neuronalen Netz gelöst. Das erste künstliche neuronale Netz ist dazu eingerichtet, eine zu verarbeitende Datenmenge von Sensordaten durch eine erste Verarbeitung zu reduzieren und reduzierte Sensordaten als Zwischenergebnis auszugeben. Das zweite künstliche neuronale Netz ist dazu eingerichtet, eine zweite Verarbeitung der reduzierten Sensordaten durchzuführen und verarbeitete Sensordaten auszugeben. Das Verfahren umfasst:
Bereitstellen von erfassten physikalischen Parametern, die von einem Sensor eines Kommunikationsgeräts erfasst wurden, als Sensordaten;
Ausführen des ersten künstlichen neuronalen Netzes durch einen Prozessor des Kommunikationsgerätes um die Datenmenge der bereitgestellten Sensordaten mit dem ersten künstlichen neuronalen Netz zu reduzieren und so reduzierte Sensordaten als Zwischenergebnis zu erhalten;
Übertragen der reduzierten Sensordaten als Zwischenergebnis über eine Kommunikationsschnittstelle des Kommunikationsgerätes an einen Server in das Kommunikationsnetzwerk;
Ausführen des zweiten künstlichen neuronalen Netzes durch den Server, um aus den empfangenen reduzierten Sensordaten verarbeitete Sensordaten zu erhalten; und
Übertragen der verarbeiteten Sensordaten an das Kommunikationsgerät.

Das Aufteilen der Auswertung der Sensordaten auf das Kommunikationsgerät und den Server kann eine Anwendung unter Echtzeitbedingungen ermöglichen, die mit dem Kommunikationsgerät alleine nicht möglich wäre.

Der Sensor kann ein Bildsensor sein, beispielsweise eine Kamera zum Erfassen von Fotos oder Videos. Die Sensordaten können Bilddaten umfassen. Der Sensor kann ein Audiosensor sein, beispielsweise ein Mikrophon. Die Sensordaten können Audiosignale umfassen. Die physikalischen Parameter können von dem Sensor erfasst werden und in Sensordaten umgewandelt werden, insbesondere in Bilddaten oder Audiodaten.

In einer Ausgestaltung wird zusätzlich der folgende Schritt durchgeführt:
Bereitstellen der übertragenen verarbeiteten Sensordaten für eine weitere Auswertung für den Prozessor des Kommunikationsgeräts durch die Kommunikationsschnittstelle des Kommunikationsgerätes.

Die von dem zweiten künstlichen neuronalen Netz verarbeiteten Sensordaten können ein Ergebnis der Auswertung umfassen. Die Übertragung des ausgewerteten Ergebnisses zurück an das Kommunikationsgerät kann das Auswertungsergebnis des rechenintensiven Prozesses dem Prozessor des Kommunikationsgerätes bereitstellen. Der Prozessor des Kommunikationsgerätes kann das Auswertungsergebnis weiter auswerten, insbesondere graphisch oder akustisch auf einer Ausgabeeinrichtung des Kommunikationsgerätes ausgeben.

In einer Ausgestaltung umfasst der Schritt des Ausführens des ersten künstlichen neuronalen Netzes ein Ausführen einer Faltung auf die Sensordaten und ein Ausführen eines Poolings auf ein Ergebnis der Faltung.

Hierdurch kann die Datenmenge der Sensordaten reduziert werden und so die zu übertragende Datenmenge klein gehalten werden. Dies kann die Geschwindigkeit der Übertragung zu dem Server reduzieren und so die Paketumlaufzeit klein halten. Die Faltung und das Pooling können je einmal oder auch mehrfach ausgeführt werden. Die Schritte können beispielsweise in einem tiefen CNN durchgeführt werden. Hierdurch lassen sich die Sensordaten aufbereiten und gleichzeitig deren Datenmenge reduzieren.

In einer Ausgestaltung umfasst der Schritt des Ausführens des zweiten künstlichen neuronalen Netzes ein Klassifizieren der empfangenen reduzierten Sensordaten umfasst.

Das Klassifizieren kann ein Endergebnis der Auswertung der Sensordaten bereitstellen.

Die Erfindung wird im Folgenden anhand von Ausführungsbeispielen und den Figuren weiter erläutert. Es zeigen:
- Fig. 1: eine schematische Übersicht einer Netzwerkanordnung;
- Fig. 2: eine schematische Darstellung eines Kommunikationsgeräts gemäß einem Ausführungsbeispiel der Erfindung;
- Fig. 3: eine schematische Darstellung eines Servers gemäß einer Ausgestaltung der Erfindung;
- Fig. 4: eine schematische Darstellung eines Kommunikationssystems gemäß einer Ausgestaltung der Erfindung;
- Fig. 5: ein Flussdiagramm für ein Verfahren gemäß einer Ausgestaltung der Erfindung; und
- Fig. 6: eine schematische Darstellung eines Ablaufs einer Auswertung gemäß einer Ausgestaltung der Erfindung.

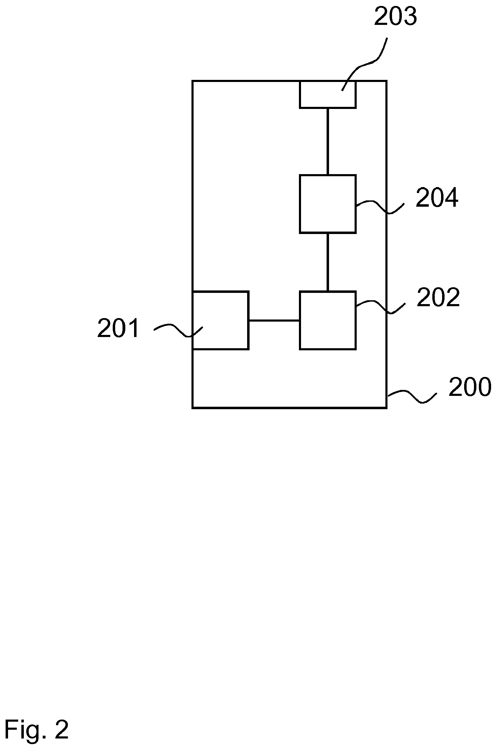

Fig. 2 zeigt ein Kommunikationsgerät 200. Das Kommunikationsgerät 200 weist einen Sensor 201 auf. Der Sensor 201 ist ein bildgebender Sensor, insbesondere eine Kamera. Der Sensor 201 kann Sensordaten erfassen, d. h. der Sensor 201 erfasst physikalische Parameter, beispielsweise nimmt der Sensor 201 Bilddaten auf, insbesondere Videodaten. In weiteren Ausführungsbeispielen handelt es sich bei dem Sensor 201 um einen akustischen Sensor, insbesondere um ein Mikrophon, einen optoakustischen Sensor, eine Kombination hieraus und eines bildgebenden Sensors oder einen anderen Sensor zum Erfassen von physikalischen Parametern.

Im beschriebenen Ausführungsbeispiel ist das Kommunikationsgerät 200 in einem Fahrzeug angeordnet. In einem anderen Ausführungsbeispiel handelt es sich um ein Smartphone oder ein anderes Computersystem.

Das Kommunikationsgerät 200 weist des Weiteren eine Kommunikationsschnittstelle 203 auf. Im beschriebenen Ausführungsbeispiel ist die Kommunikationsschnittstelle 203 eine Funkschnittstelle, die dazu eingerichtet ist, Daten und Signale über ein Kommunikationsnetzwerk 107 zu senden und zu empfangen. In einem weiteren Ausführungsbeispiel ist die Kommunikationsschnittstelle 203 eine kabelgebundene Kommunikationsschnittstelle.

Über die Kommunikationsschnittstelle 203 kann für das Kommunikationsgerät 200 eine Verbindung zu dem Kommunikationsnetzwerk 107, wie in Fig. 1 dargestellt, aufbauen. Über die Kommunikationsschnittstelle 203 kann das Kommunikationsgerät 200 Daten in das Kommunikationsnetzwerk 107 senden bzw. aus dem Kommunikationsnetzwerk 107 empfangen. In einem anderen Ausführungsbeispiel ist das Kommunikationsnetzwerk ein Kabelgebundenes Netzwerk oder ein Funknetzwerk oder ein Mobilfunknetzwerk, das sich von dem Kommunikationsnetzwerk 107 gemäß Fig. 1 unterscheidet und die Kommunikationsschnittstelle 203 ist ausgebildet, eine Verbindung hierzu herzustellen.

Das Kommunikationsgerät 200 weist des Weiteren einen Prozessor 204 auf. Der Prozessor 204 kann auf einen Speicher 202 des Kommunikationsgeräts 200 zugreifen und die in dem Speicher 202 gespeicherten Daten auslesen, insbesondere in dem Speicher gespeicherte Sensordaten. Der Prozessor 204 kann des Weiteren auf die Kommunikationsschnittstelle 203 zugreifen und diese so steuern, dass Daten über die Kommunikationsschnittstelle gesendet oder empfangen werden können, insbesondere in das Kommunikationsnetzwerk 107 bzw. aus dem Kommunikationsnetzwerk 107.

Der Prozessor 204 ist dazu eingerichtet, ein erstes künstliches neuronales Netz lokal in dem Kommunikationsgerät 200 auszuführen. Ein künstliches neuronales Netz, insbesondere ein tiefes neuronales Netz, kann eine Vielzahl von Schichten aufweisen, die jeweils Neuronen umfassen, die Eingangsdaten bewerten und in die nächstliegende Schicht weiterleiten. Hierbei werden die Eingangsdaten ausgewertet. Derartige Rechenoperationen sind rechnerisch sehr aufwendig und werden bevorzugt auf performanten Rechnern, wie Servern, ausgeführt.

In dem ersten künstlichen neuronalen Netz findet eine Vorprozessierung der Sensordaten zur weiteren Verarbeitung in einem zweiten künstlichen neuronalen Netz statt. Bei dem ersten künstlichen neuronalen Netz handelt es sich um ein sogenanntes deep convolutional neuronal network, kurz: depp CNN. In einem anderen Ausführungsbeispiel handelt es sich um eine andere Art neuronales Netz. Das erste künstliche neuronale Netz und das zweite künstliche neuronale Netz werden als Schichten eines gemeinsamen künstlichen neuronalen Netzes betrachtet.

Der Prozessor 204 ist dazu eingerichtet, das erste künstliche neuronale Netz in dem Kommunikationsgerät 200 auszuführen, bevor die Sensordaten zur weiteren Verarbeitung an das zweite künstliche neuronale Netz in dem Kommunikationsnetzwerk 107 übertragen werden. Die Sensordaten werden durch den Prozessor 204 also aufbereitet. Die aufbereiteten, d.h. vorprozessierten Daten können über die Kommunikationsschnittstelle 203 an einen Server 300 gesendet werden, um im Server 300 weiter ausgewertet zu werden.

Die Aufbereitung durch das erste künstliche neuronale Netz umfasst hierbei eine Reduzierung der Sensordaten zu reduzierten Sensordaten. Das heißt, die Datenmenge der Sensordaten, die von dem Sensor 201 bereitgestellt werden wird durch die Anwendung des ersten künstlichen neuronalen Netzes auf die bereitgestellten Sensordaten reduziert.

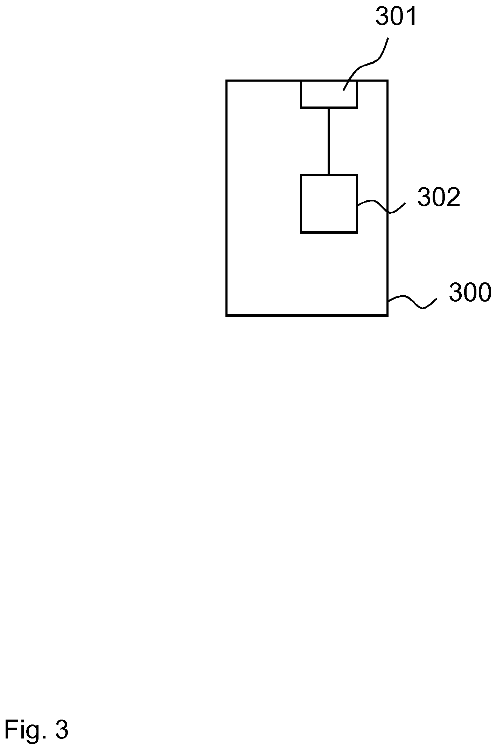

Fig. 3 zeigt eine schematische Darstellung des Servers 300 gemäß einem Ausführungsbeispiel der Erfindung. Der Server 300 ist in dem Kommunikationsnetzwerk 107 angeordnet (in Fig. 3 nicht dargestellt). Der Server 300 ist hierbei an einem Rand des Kommunikationsnetzwerks 107 angeordnet und somit von der Backbone-Ebene 202 und der Internet-Ebene 101 entfernt und logisch in Richtung Geräte-Ebene 106 verschoben. Der Server 300 ist an der Edge des Kommunikationsnetzwerks 107 angeordnet und daher für Edge-Computing geeignet. Dies reduziert die bei der Übertragung beteiligten Netzwerkentitäten und somit Latenzzeiten, Umlaufzeiten und Jitter-Effekte. Eine Übertragung zwischen dem Kommunikationsgerät 200 und dem Server 300 findet daher schneller statt als eine Übertragung zwischen dem Kommunikationsgerät 200 und beispielsweise einem Server in der Internet-Ebene 101. So können echtzeitkritische Funktionalitäten zwischen dem Kommunikationsgerät 200 und dem Server 300 ausgetauscht werden. In einer alternativen Ausgestaltung ist der Server 300 nicht an einem Rand des Kommunikationsnetzwerks 107 angeordnet.

Der Server 300 weist eine Kommunikationsschnittstelle 301 auf. Bei der Kommunikationsschnittstelle 301 handelt es sich um eine Netzwerkschnittstelle, die dazu eingerichtet ist, Daten von dem Kommunikationsgerät 200, zu empfangen und an das Kommunikationsgerät 200 zu senden. Der Empfang findet über eine Basisstation, beispielsweise einen eNodeB, statt. Die Kommunikationsschnittstelle 301 des Servers 300 ist dazu eingerichtet, von dem Kommunikationsgerät 200 vorprozessierte Daten, insbesondere die reduzierten Sensordaten, zu empfangen.

Der Server 300 weist einen Prozessor 302 auf. Der Prozessor 302 ist dazu eingerichtet, das zweite künstliche neuronale Netz zu betreiben. Das zweite künstliche neuronale Netz ist hierbei insbesondere ein tiefes neuronales Netz mit einer Vielzahl an Schichten.

Der Prozessor 302 des Servers 300 ist dazu eingerichtet, die reduzierten Sensordaten als Eingangsdaten für das zweite künstliche neuronale Netz zu verwenden. Die reduzierten Sensordaten können hierbei von dem Kommunikationsgerät 200 bearbeitet worden sein.

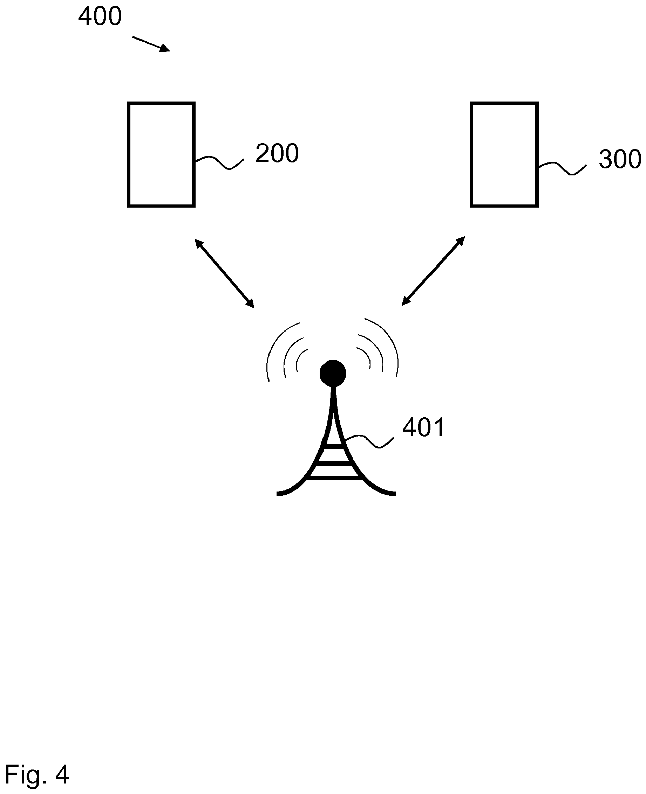

Fig. 4 zeigt ein Kommunikationssystem 400 mit dem Kommunikationsgerät 200, dem Server 300 und einer Basisstation 401. Die Basisstation 401 kann beispielsweise ein eNnodeB eines Kommunikationsnetzwerks 107, insbesondere eines LTE Funknetzwerks, sein. In einem weiteren Ausführungsbeispiel handelt es sich bei der Basisstation 401 um eine andere Netzwerkentität, beispielsweise einen gNB eines 5G Netzwerkes.

Das Kommunikationsgerät 200 erfasst über den Sensor 201 Sensordaten. Die Datenmenge der Sensordaten können in der oben beschriebenen Art und Weise reduziert und über die Kommunikationsschnittstelle 203 an das Kommunikationsnetzwerk 107 gesendet werden. Dabei sendet das Kommunikationsgerät 200 die reduzierten Sensordaten an die Basisstation 401. Die Basisstation 401 stellt eine Verbindung zu dem Kommunikationsnetzwerk 107 dar. In dem Kommunikationsnetzwerk 107 ist der Server 300 angeordnet. Der Server 300 empfängt die von dem Kommunikationsgerät 200 zu der Basisstation 401 gesendeten reduzierten Sensordaten durch eine Weiterleitung der reduzierten Sensordaten von der Basisstation 401 an den Server 300.

Der Server 300 ist in dem beschriebenen Ausführungsbeispiel an einem Rand des Kommunikationsnetzwerks 107 angeordnet, d. h. auf logischer Ebene nahe der Basisstation 401. In einem weiteren Ausführungsbeispiel ist der Server 300 in der Basisstation 401 angeordnet und somit noch näher an dem Kommunikationsgerät 200.

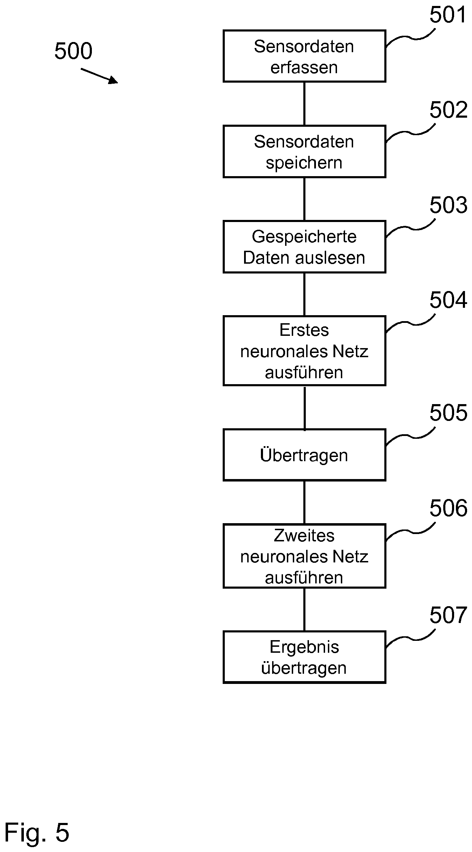

Fig. 5 zeigt ein Flussdiagramm 500 für ein Verfahren gemäß einer Ausgestaltung der Erfindung.

In einem Verfahrensschritt 501 werden Sensordaten erfasst. Die Erfassung findet hierbei durch den Sensor 201 des Kommunikationsgeräts 200 statt. Als Sensordaten werden hierbei Daten angesehen, die von dem Sensor 201 ausgegeben werden und gegebenenfalls bereits eine Aufbereitung erfahren haben, insbesondere eine graphische Aufbereitung.

In Schritt 502 werden die Sensordaten in dem Speicher 202 gespeichert. Hierfür leitet der Sensor 201 die Sensordaten an den Speicher 202 mit einem Speicherbefehl weiter. In einem anderen Ausführungsbeispiel werden die Sensordaten bildtechnisch verarbeitet und dann in dem Speicher 202 gespeichert. In einem anderen Ausführungsbeispiel werden die Sensordaten nicht in dem Speicher 202 gespeichert, sondern beispielsweise in einem internen Speicher des Prozessors 204 gespeichert bzw. zwischengespeichert.

Im Schritt 503 liest der Prozessor 204 des Kommunikationsgeräts 200 die in dem Speicher 202 gespeicherten Sensordaten aus dem Speicher 202 aus. Der Prozessor 204 bereitet somit eine Verarbeitung der bereitgestellten Sensordaten vor. Die Sensordaten können dem Prozessor 204 auch von dem Sensor 201 direkt bereitgestellt werden, ohne in dem Speicher 202 gespeichert zu sein. Hierbei kann der Speicher 202 entfallen. Somit können auch die Schritte 502 und 503 entfallen.

In einem Schritt 504 führt der Prozessor 204 das erste künstliche neuronale Netz aus. Der Prozessor 204 prozessiert somit die bereitgestellten Sensordaten für eine weitere Verarbeitung in einer tieferen Schicht, insbesondere dem zweiten künstlichen neuronalen Netz, des neuronalen Netzes vor. Der Prozessor stellt durch Ausführen des ersten künstlichen neuronalen Netzes auf die bereitgestellten Sensordaten reduzierte Sensordaten als Zwischenergebnis bereit, die gegenüber den vom Sensor 201 bereitgestellten Sensordaten eine reduzierte Datenmenge aufweisen.

Die Sensordaten werden hierbei durch das erste künstliche neuronale Netz bearbeitet. Das Ausführen des ersten künstlichen neuronalen Netzes umfasst in dem beschriebenen Ausführungsbeispiel ein wiederholtes Ausführen einer Faltung mit einer 5x5-Matrix und ein anschließendes Pooling durch Subsampling. Die Anzahl der rekursiven Wiederholungen des Faltens und Poolens kann festgelegt oder dynamisch durch das neuronale Netz erlernt werden.

Durch die Faltung werden Basisstrukturen und Texturen eines Bildmaterials erfasst. Diese Schritte werden auf Englisch Convolution-Subsampling-Schritte bezeichnet. Bei der Faltung kommt ein 5x5-Matrixfilter zum Einsatz. In einem weiteren Ausführungsbeispiel kommt ein anderer Filter zum Einsatz. Ebenso kann in einem weiteren Ausführungsbeispiel anstatt der Faltung ein anderer Bearbeitungsschritt durchgeführt werden. Beim Subsampling wird ein Downsampling-Verfahren durchgeführt, insbesondere mit einem Max-Pooling-Verfahren.

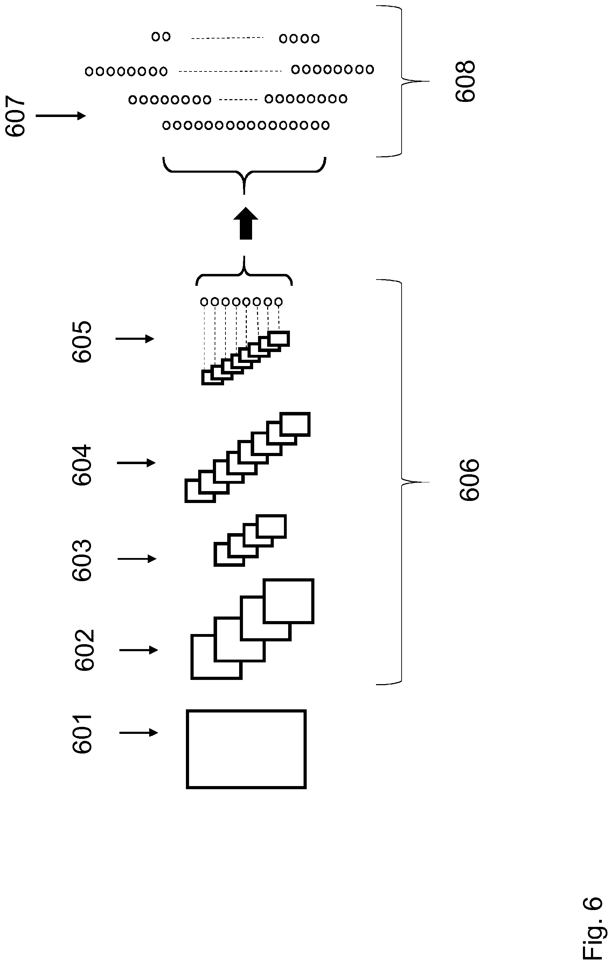

Durch das Pooling wird die Datenmenge der gefalteten Sensordaten reduziert. Das Subsampling reduziert die Dateigrößen und vereinfacht somit die Datenstruktur. Dies wird unten in Bezug auf Fig. 6 näher erläutert.

In Schritt 505 werden die reduzierten Sensordaten, also das vorprozessierte Zwischenergebnis der Auswertung, an den Server 300 übertragen. Die reduzierten Sensordaten werden hierbei über die Kommunikationsschnittstelle 203 des Kommunikationsgerätes 200 an den Server 300 übertragen.

Der Prozessor 204 komprimiert im beschriebenen Ausführungsbeispiel das Zwischenergebnis der Aufbereitung nach der Ausführung des ersten künstlichen neuronalen Netzes. In einem weiteren Ausführungsbeispiel wird dieses Zwischenergebnis nicht komprimiert an den Server 300 gesendet.

Der Server 300 empfängt die reduzierten Sensordaten über die Kommunikationsschnittstelle 301 des Servers 300 und führt diese dem Prozessor 302 des Servers 300 zur weiteren Verarbeitung durch das zweite künstliche neuronale Netz zu.

Im Schritt 506 führt der Prozessor 302 des Servers 300 das zweite künstliche neuronale Netz aus.

Die zweite Verarbeitung in dem zweiten künstlichen neuronalen Netz, mit gegebenenfalls mehreren Schichten des zweiten künstlichen neuronalen Netzes, wird in an sich bekannter Weise durchgeführt. Hierbei wird jedoch auf dem Server 300 die Auswertung der Sensordaten ab der Schicht ausgeführt, die nach der Schicht kommt, die durch den Prozessor 204 des Kommunikationsgeräts 200 vorab durchgeführt wurde. Durch das zweite künstliche neuronale Netz werden die reduzierten Sensordaten klassifiziert. In einem weiteren Ausführungsbeispiel werden die reduzierten Sensordaten anders verarbeitet.

In Schritt 507 wird ein Auswertungsergebnis des zweiten künstlichen neuronalen Netzes zurück an das Kommunikationsgerät 200 übertragen. Die Übertragung findet hierbei von der Kommunikationsschnittstelle 301 des Servers 300 über die Basisstation 401 an die Kommunikationsschnittstelle 203 des Kommunikationsgeräts 200 statt. Das Ergebnis der Auswertung mit dem zweiten künstlichen neuronalen Netz kann dann von dem Prozessor 204 einem Benutzer beispielsweise auf einer Ausgabeeinrichtung (nicht dargestellt) ausgegeben werden.

Hiernach kann ein weiteren (in Fig. 5 nicht dargestellten) Schritten eine weitere Auswertung des Auswertungsergebnisses durch den Prozessor 204 erfolgen, insbesondere ein Ausgabe auf einer Ausgabeeinrichtung.

Fig. 6 zeigt eine schematische Darstellung eines ersten künstlichen neuronalen Netzes 606 und eines zweiten künstlichen neuronalen Netzes 608 gemäß einem Ausführungsbeispiel.

In Fig. 6 sind die bereitgestellten Sensordaten 601 des Sensors 201 dargestellt. Diese werden durch das erste künstliche neuronale Netz 606 von dem Prozessor 204 des Kommunikationssystems 200 aufbereitet, an den Server 300 übertragen (durch einen fetten Pfeil dargestellt) und von dem Prozessor 302 des Servers 300 in dem zweiten künstlichen neuronalen Netz 608, insbesondere in mehreren vollverbundenen Schichten 607 des zweiten künstlichen neuronalen Netzes 608, weiter ausgewertet.

Die erste Verarbeitung der Sensordaten 601 durch das erste künstliche neuronale Netz 606 umfasst mehrere Bearbeitungsschritte 602 bis 605. In einem ersten Bearbeitungsschritt 602, einer Faltungsschicht, wird eine Faltung der Sensordaten 601 vorgenommen. Im Anschluss hieran wird ein Pooling 603 in einer Poolingschicht des ersten künstlichen neuronale Netzes 606 vorgenommen und die Datenmenge der gefalteten Sensordaten durch Subsampling reduziert.

Dieser Schritt wird in dem ersten künstlichen neuronalen Netz 606 rekursiv wiederholt ausgeführt. Im beschriebenen Ausführungsbeispiel wird dies zweimal wiederholt, in einer zweiten Faltungsschicht 604 und einer zweiten Poolingschicht 605. In anderen Ausführungsbeispielen umfasst das erste künstliche neuronale Netz 606 lediglich ein einzelnes Ausführen von Faltung 602 und Pooling 603 oder mehr als zwei Wiederholungen. Die Anzahl der Wiederholungen von Faltung und Pooling wird durch das erste künstliche neuronale Netz 606 selbständig gelernt und auf Basis von Auswertungsergebnissen verbessert. In einem weiteren Ausführungsbeispiel wird die Anzahl der Wiederholungen festgelegt.

Das Ergebnis des Ausführens des ersten künstlichen neuronale Netzes 606 durch den Prozessor 204 ist ein Zwischenergebnis bei der Auswertung der Sensordaten durch das gemeinsame neuronale Netz umfassend das erste künstliche neuronale Netz 606 und das zweite künstliche neuronale Netz 608. In Fig. 6 ist das Zwischenergebnis durch eine vertikale Reihe von Kreisen in Schritt 605 dargestellt, die eine Übergabe der aufbereiteten Sensordaten an Neuronen des neuronalen Netzes symbolisieren.

Auf dem Server 300 werden die in dem Kommunikationsgerät 200 reduzierten Sensordaten weiter ausgewertet. Dies ist durch das zweite künstliche neuronale Netz 608 und die vertikalen Reihen von Kreisen dargestellt, die weitere Schichten 607 des neuronalen Netzes symbolisieren.

### Bezugszeichenliste

- 100: Netzwerkanordnung
- 101-106: Ebene
- 107: Kommunikationsnetzwerk
- 200: Kommunikationsgerät
- 201: Sensor
- 202: Speicher
- 203,301: Kommunikationsschnittstelle
- 204,302: Prozessor
- 300: Server
- 400: Kommunikationssystem
- 401: Basisstation
- 500: Flussdiagramm
- 501-507: Verfahrensschritt
- 601: Sensordaten
- 602-605: Bearbeitungsschritt
- 606: erstes künstliches neuronales Netz
- 607: weitere Schichten
- 608: zweites künstliches neuronales Netz

## Patentansprüche

1. Kommunikationsgerät (200) zum Auswerten von Sensordaten (601) mit einem ersten künstlichen neuronalen Netz (606) und einem zweiten künstlichen neuronalen Netz (607), wobei das erste künstliche neuronale Netz (606) dazu eingerichtet ist, eine zu verarbeitende Datenmenge von Sensordaten (601) durch eine erste Verarbeitung zu reduzieren und reduzierte Sensordaten als Zwischenergebnis auszugeben und wobei das zweite künstliche neuronale Netz (607) dazu eingerichtet ist, eine zweite Verarbeitung der reduzierten Sensordaten durchzuführen und verarbeitete Sensordaten auszugeben, wobei das Kommunikationsgerät (200) über ein Kommunikationsnetzwerk (107) mit einem Server (300) verbunden ist, der dazu eingerichtet ist, das zweite künstliche neuronale Netz (607) auszuführen, mit:
einer Kommunikationsschnittstelle (203), die dazu eingerichtet ist, mit dem Server (300) über das Kommunikationsnetzwerk (107) zu kommunizieren;
einem Sensor (201), der dazu eingerichtet ist, physikalische Parameter zu erfassen und als Sensordaten (601) bereitzustellen; und
einem Prozessor (204), der dazu eingerichtet ist, das erste künstliche neuronale Netz (606) lokal in dem Kommunikationsgerät (200) auszuführen, um die Datenmenge der bereitgestellten Sensordaten (601) mit dem ersten künstlichen neuronalen Netz (606) zu reduzieren und so reduzierte Sensordaten als Zwischenergebnis zu erhalten; wobei
die Kommunikationsschnittstelle (203) ausgebildet ist, die reduzierten Sensordaten als Zwischenergebnis an den Server (300) über das Kommunikationsnetzwerk (107) zu übertragen um die reduzierten Sensordaten in dem zweiten künstlichen neuronalen Netz (607) zu verarbeiten und so verarbeitete Sensordaten zu erhalten; wobei
die Kommunikationsschnittstelle (203) ausgebildet ist von dem Server (300) die verarbeiteten Sensordaten zu empfangen und dem Prozessor (204) für eine weitere Auswertung bereitzustellen.

2. Kommunikationsgerät (200) nach Anspruch 1, wobei der Prozessor (204) dazu eingerichtet ist, die reduzierten Sensordaten vor dem Übertragen zu komprimieren.

3. Kommunikationsgerät (200) nach einem der vorhergehenden Ansprüche, wobei das Kommunikationsgerät (200) ein Smartphone oder einen Tablet-Computer oder ein Notebook oder einen Desktopcomputer ist oder in einem Fahrzeug angeordnet ist.

4. Kommunikationsgerät (200) nach einem der vorhergehenden Ansprüche, wobei der Prozessor (204) dazu eingerichtet ist, als weitere Auswertung eine graphische Darstellung der verarbeiteten Sensordaten bereitzustellen.

5. Kommunikationsgerät (200) nach einem der vorhergehenden Ansprüche, wobei der Prozessor (204) dazu eingerichtet ist, bei der Ausführung des ersten künstlichen neuronale Netzes (606) eine Faltung der Sensordaten (601) durchzuführen um gefaltete Sensordaten zu erhalten.

6. Kommunikationsgerät (200) nach Anspruch 5, wobei der Prozessor (204) dazu eingerichtet ist, bei der Ausführung des ersten künstlichen neuronale Netzes (606) ein Pooling der gefalteten Sensordaten (601) durchzuführen.

7. Kommunikationsgerät (200) nach Anspruch 6, wobei der Prozessor (204) dazu eingerichtet ist, bei der Ausführung des ersten künstlichen neuronale Netzes (606) die Faltung der Sensordaten (601) und das Pooling der gefalteten Sensordaten rekursiv durchzuführen.

8. Server (300) zum Verarbeiten von durch ein erstes künstliches neuronales Netz (606) reduzierten Sensordaten mit einem zweiten künstlichen neuronalen Netz (607), wobei die reduzierten Sensordaten Sensordaten (601) eines Sensors (201) eines Kommunikationsgeräts (200) mit reduzierter Datenmenge umfassen, wobei der Server (300) in einem Kommunikationsnetzwerk (107) angeordnet ist, mit:
einer Kommunikationsschnittstelle (301), die dazu eingerichtet ist, die reduzierten Sensordaten von dem Kommunikationsgerät (200) zu empfangen, das eingerichtet ist, das erste künstliche neuronale Netz (606) auszuführen um die Datenmenge der Sensordaten des Sensors (201) zu reduzieren;
einem Prozessor (302), der dazu eingerichtet ist, das zweite künstliche neuronalen Netz (607) auszuführen um aus den empfangenen reduzierten Sensordaten verarbeitete Sensordaten zu erhalten; und wobei
die Kommunikationsschnittstelle (301) ausgebildet ist, die verarbeiteten Sensordaten an das Kommunikationsgerät (200) zu übertragen.

9. Server (300) nach Anspruch 8, wobei der Server (300) an einem Rand des Kommunikationsnetzwerks (107) angeordnet ist.

10. Server (300) nach einem der Ansprüche 8 oder 9, wobei das zweite künstliche neuronalen Netz (607) dazu eingerichtet ist, eine Klassifizierung der reduzierten Sensordaten durchzuführen.

11. Kommunikationssystem (400) mit einem Kommunikationsgerät (200) nach einem der Ansprüche 1 bis 7, einem Server (300) nach einem der Ansprüche 8 bis 10 und einer Basisstation (401) eines Kommunikationsnetzwerks (107), wobei die Kommunikationsschnittstelle (203) des Kommunikationsgeräts (200) dazu eingerichtet ist, die reduzierten Sensordaten über die Basisstation (401) an den Server (300) zu übertragen.

12. Verfahren zum Auswerten von Sensordaten (601) mit einem ersten künstlichen neuronalen Netz (606) und einem zweiten künstlichen neuronalen Netz (607), wobei das erste künstliche neuronale Netz (606) dazu eingerichtet ist, eine zu verarbeitende Datenmenge von Sensordaten (601) durch eine erste Verarbeitung zu reduzieren und reduzierte Sensordaten als Zwischenergebnis auszugeben und wobei das zweite künstliche neuronale Netz (607) dazu eingerichtet ist, eine zweite Verarbeitung der reduzierten Sensordaten durchzuführen und verarbeitete Sensordaten auszugeben, mit:
Bereitstellen von erfassten physikalischen Parametern, die von einem Sensor (201) eines Kommunikationsgeräts (200) erfasst wurden, als Sensordaten (601);
Ausführen des ersten künstlichen neuronalen Netzes (606) durch einen Prozessor (204) des Kommunikationsgerätes (200) um die Datenmenge der bereitgestellten Sensordaten (601) mit dem ersten künstlichen neuronalen Netz (606) zu reduzieren und so reduzierte Sensordaten als Zwischenergebnis zu erhalten;
Übertragen der reduzierten Sensordaten als Zwischenergebnis über eine Kommunikationsschnittstelle (203) des Kommunikationsgerätes (200) an einen Server (300) in das Kommunikationsnetzwerk (107);
Ausführen des zweiten künstlichen neuronalen Netzes (607) durch den Server (300), um aus den empfangenen reduzierten Sensordaten verarbeitete Sensordaten zu erhalten; und
Übertragen der verarbeiteten Sensordaten an das Kommunikationsgerät (200).

13. Verfahren nach Anspruch 12, wobei zusätzlich der folgende Schritt durchgeführt wird: Bereitstellen der übertragenen verarbeiteten Sensordaten für eine weitere Auswertung für den Prozessor (204) des Kommunikationsgeräts (200) durch die Kommunikationsschnittstelle (203) des Kommunikationsgerätes (200).

14. Verfahren nach einem der Ansprüche 12 oder 13, wobei der Schritt des Ausführens des ersten künstlichen neuronalen Netzes (606) ein Ausführen einer Faltung auf die Sensordaten (601) und ein Ausführen eines Poolings auf ein Ergebnis der Faltung umfasst.

15. Verfahren nach einem der Ansprüche 12 bis 14, wobei der Schritt des Ausführens des zweiten künstlichen neuronalen Netzes (607) ein Klassifizieren der empfangenen reduzierten Sensordaten umfasst.
